# EUROPEAN PATENT APPLICATION

(11) **EP 3 702 008 A1**
(43) Date of publication of application: **02.09.2020**
(21) Application number: 19159819.2
(22) Date of filing: 27.02.2019
(51) Int. Cl.: A63F 13/213, A63F 13/428, A63F 13/655, A63F 13/92

(54) **DISPLAYING A VIEWPORT OF A VIRTUAL SPACE**

(71) Applicant: Nokia Technologies Oy, 02610 Espoo (FI)
(72) Inventor: Eronen, Antti, 33820 Tampere (FI); Leppanen, Jussi, 33580 Tampere (FI); Lehtiniemi, Arto, 33880 Lempäälä (FI); Laaksonen, Lasse, 33210 Tampere (FI)
(74) Representative: Sayer, Robert David

(57) **Abstract**

An apparatus is disclosed comprising means for receiving image data representing one or more images of a user interacting with a virtual space, wherein the image data is received from a camera provided on a user device associated with the user. The means may further cause display to a display of the user device associated with the user, the display being on substantially the same side or plane of the user device as the camera. The display may be of video data representing a viewport of the virtual space, which viewport in part comprises a virtualised avatar of the user based on the received image data, whereby the user avatar is also displayable in viewports provided to one or more other users interacting with the virtual space.

## Description

### Field

Example embodiments relate to an apparatus, method and computer program product for displaying a viewport of a virtual space.

### Background

The term extended reality (XR) is sometimes used as a generic term to cover various technologies providing real-and-virtual combined environments. These may include virtual reality (VR), augmented reality (AR) and mixed reality (MR) technologies.

Virtual reality (VR) is a rapidly developing area of technology in which video and/or audio content is provided to a user device, such as a headset. As is known, the user device may be provided with a live or stored feed from a content source, the feed representing a virtual space or world for immersive output through the user device. In some example embodiments, the audio may be spatial audio. A virtual space may be any computer-generated version of a space, for example a captured real world space, in which a user can be immersed through the user device. For example, a virtual reality headset may be configured to provide virtual reality video and/or audio content to the user, e.g. through the use of a pair of display screens and/or headphones incorporated within the headset. The virtual space may be larger than the visual field of the user and hence the user is shown only a part or portion of the virtual space. The part or portion content may be based on the position of the user device and is referred to generally as "the viewport."

Position and/or movement of the user device can enhance the immersive experience. Some virtual reality headsets use so-called three degrees of freedom (3DoF) which means that the head movement in the yaw, pitch and roll axes are measured and determine what the user sees and/or hears. This facilitates the scene remaining largely static in a single location as the user rotates their head. A next stage may be referred to as 3DoF+ which may facilitate limited translational movement in Euclidean space in the range of, e.g. tens of centimetres, around a location. A yet further stage is a six degrees-of-freedom (6DoF) virtual reality system, where the user is able to freely move in the Euclidean space and rotate their head in the yaw, pitch and roll axes. Six degrees-of-freedom virtual reality systems and methods will enable the provision and consumption of volumetric virtual reality content.

Volumetric virtual reality content comprises data representing spaces and/or objects in three-dimensions from all angles, enabling the user to move fully around the spaces and/or objects to view them from any angle. For example, a person or object may be fully scanned and reproduced within a real-world space. When rendered to a virtual reality headset, the user may 'walk around' the person or object and view and/or hear them from the front, the sides and from behind. Users may also be able to interact with other objects, for example virtual objects (e.g. a computer-generated person or object or service) or real objects (e.g. another person involved in the same virtual scene.)

For the avoidance of doubt, references to virtual reality (VR) are also intended to cover related technologies such as augmented reality (AR) and mixed reality (MR) within the general field of extended reality (XR.)

### Summary

According to an example embodiment, there is provided an apparatus comprising means for: receiving image data representing one or more images of a user interacting with a virtual space, wherein the image data is received from a camera provided on a user device associated with the user; causing display, to a display of the user device associated with the user, the display being on substantially the same side or plane of the user device as the camera, of video data representing a viewport of the virtual space, which viewport in part comprises a virtualised avatar of the user based on the received image data, whereby the user avatar is also displayable in viewports provided to one or more other users interacting with the virtual space.

The user avatar may represent a substantially mirrored version of the one or more user images.

The means may be configured such that the user avatar, when displayed in viewports provided to one or more other users interacting with the virtual space, is a modified version based on the relative position of the one or more other users to the position of the user or user avatar in the virtual space.

The means may be further configured for detecting from the received image data at least part of a user's face, generating the avatar of the user using the detected at least part of a user's face such that the viewport caused to be displayed to the user device shows in part their avatar in the virtual space.

The means may be further configured for causing display to the user device of one or more second avatars in the viewport, the one or more second avatars representing the respective position of the one or more other users in the virtual space.

The means may be further configured to enable communication between one or more other users based on the relative proximity and/or orientation of the user avatar and the one or more second avatars.

The means may be further configured to permit user navigation within the virtual space based on user input.

The means may be configured to permit user navigation by means of movement of the user and/or the user device.

The means may be configured to cause movement of the user avatar in the virtual space, responsive to detection of relative movement between the user and the user device.

The means may be configured to perform translational movement of the user avatar in the virtual space responsive to detection of corresponding relative translational movement of the user and the user device.

In the event that the user is involved in a communication with one or more other users represented by one or more second avatars in the virtual space, the means may be further configured to limit the amount of translational movement of the user avatar from the one or more second avatars in the virtual space to a predetermined maximum threshold distance.

The means may be further configured to effect a rotational movement of the user avatar responsive to further translational movement of the user and user device beyond the predetermined maximum threshold distance.

The means may be further configured, responsive to detection of a predetermined user input or interaction, to cause the video data to represent movement of the viewport in the virtual space independent of movement of the user avatar.

The predetermined user input or interaction may be a rotational movement of the user device to cause a rotational movement of viewport in the virtual space.

The means may be further configured to cause output of an indication to the user device in the event of one or more of: an object being detected at the same location as the user location; an object being detected between the user location and that of one or more second avatars in the viewport such as to substantially block the user avatar in the viewport, the one or more second avatars representing the respective position of the one or more other users in the virtual space; and one or more second avatars, representing the respective position of the one or more other users in the virtual space, that were previously in the viewport have moved outside the viewport.

The means may be further configured to return the viewport to an alternative or previous state in response to a user input or interaction.

The means may be further configured to cause display a picture-in-picture image of the user avatar in response to an object or other avatar in the virtual space substantially blocking the user avatar in the viewport.

In the above definitions, the means may comprise: at least one processor; and at least one memory including computer program code, the at least one memory and computer program code configured to, with the at least one processor, cause the performance of the apparatus.

According to another example embodiment, there is provided a method comprising: receiving image data representing one or more images of a user interacting with a virtual space, wherein the image data is received from a camera provided on a user device associated with the user; and causing display to a display of the user device associated with the user, the display being on substantially the same side or plane of the user device as the camera, of video data representing a viewport of the virtual space, which viewport in part comprises a virtualised avatar of the user based on the received image data, whereby the user avatar is also displayable in viewports provided to one or more other users interacting with the virtual space.

According to another example embodiment, there is provided a non-transitory computer readable medium comprising program instructions stored thereon for performing a method, comprising: receiving image data representing one or more images of a user interacting with a virtual space, wherein the image data is received from a camera provided on a user device associated with the user; causing display, to a display of the user device associated with the user, the display being on substantially the same side or plane of the user device as the camera, of video data representing a viewport of the virtual space, which viewport in part comprises a virtualised avatar of the user based on the received image data, whereby the user avatar is also displayable in viewports provided to one or more other users interacting with the virtual space.

### Drawings

Example embodiments will now be described, by way of non-limiting example, with reference to the accompanying drawings, in which:
FIG. 1 is a perspective view of a system for users to interact in an immersive space;
FIG. 2 is a block diagram showing components of an apparatus according to example embodiments;
FIG. 3 is a flow diagram showing processing operations that may be performed according to some example embodiments;
FIG. 4 is a flow diagram showing processing operations that may be performed according to other example embodiments;
FIG. 5 is a flow diagram showing processing operations that may be performed according to other example embodiments;
FIG. 6 is a top plan schematic view of a user in real space and a top plan representation of what may be rendered in virtual space, according to example embodiments;
FIG. 7 is a top plan schematic view similar to FIG. 6, in which the user has changed position and which shows a corresponding effect in virtual space, according to example embodiments;
FIG. 8 is a top plan schematic view similar to FIG. 6, in which the user has changed position and which shows a corresponding effect in virtual space, different from that in FIG. 7, according to example embodiments;
FIG. 9 is a top plan schematic view similar to FIG. 6, in which the user has changed position and which shows a corresponding effect in virtual space, different from that in FIGS. 7 - 8, according to example embodiments;
FIG. 10 is a top plan schematic view similar to FIG. 6, in which the user has changed position and which shows a corresponding effect in virtual space, different from that in FIGS. 7 - 9, according to example embodiments;
FIG. 11 is a top plan schematic view similar to FIG. 6, in which the user has changed position and which shows a corresponding effect in virtual space, different from that in FIGS. 7 - 10, according to example embodiments;
FIG. 12 is a top plan schematic view similar to FIG. 6, in which the user has changed position and which shows a corresponding effect in virtual space, different from that in FIGS. 7 - 11, according to example embodiments;
FIG. 13 is a top plan schematic view similar to FIG. 6, in which the user has changed position and which shows a corresponding effect in virtual space, different from that in FIGS. 7 - 12, according to example embodiments;
FIGS. 14A - 14G are front view representations of what may be seen in a user interface of an apparatus according to example embodiments responsive to different movements and/or situations; and
FIGS. 15A and 15B shows examples of non-volatile media according to example embodiments.

### Detailed Description

In the description and drawings, like reference numerals refer to like elements throughout.

Embodiments herein relate to immersive media based on extended reality (XR) technologies, such as for example virtual reality (VR), and in particular to processing methods and systems for providing video and possibly audio data representing a virtual space. The virtual space may be generated based on capturing video and possibly sound from a real-world space. The virtual space may alternatively be computer-generated. The virtual space may also be a combination of computer-generated and real-world space. Embodiments are applicable to any form of immersive multimedia methods or systems. Such methods and systems are applicable to any type of extended reality (XR) technology, including Virtual Reality (VR), Augmented Reality (AR) and mixed reality (MR).

Example embodiments are concerned with the provision of video data, that is data representing one or more images for display to a user device, which video data represents a viewport of a virtual space. The viewport is the user's "window" into the virtual space and hence the video data represents part of the overall virtual space and updates as the user changes position and/or orientation. The viewport may also update if the virtual space itself changes, e.g. if an object in the virtual space moves within the region corresponding to the viewport.

Example embodiments may also cause display of an avatar of the user within the viewport based on a received image of the user. Accordingly, the user is able, when consuming the video data through a user device, to see a "user avatar" representation of themselves within the virtual space as other users see them, save perhaps for certain changes in perspective based on the other users' positions relative to the subject user. This user avatar may also be displayable in viewports provided to one or more other users interacting with the same virtual space.

In this context, an avatar may be considered any visual data representation of a user in a virtual space, for example something that represents them in graphical form in the virtual space as distinct from other users. It may be a drawing-like representation, a photographic-like representation and/or even a video feed, possibly a live video feed. In some embodiments, an image of the user may be captured and the digital representation of the image used as the avatar. The captured image may represent all or part of the user. For example, the captured image may represent the user's face. Where the captured image is of a region bigger than the user's face, known methods may be used to identify and extract a facial region or facial features, e.g. from the rest of the body or upper body region. For example, the captured facial region may provide the avatar in two or three-dimensional forms. For example, the captured facial region may be extracted and rendered on a three-dimensional manifold of a head, with or without a body, to provide the avatar for display. The user may customise their avatar in some examples, for example to select a particular height, build, hairstyle, clothing etc. The captured image may be taken periodically or continuously; the captured image may be a video image comprising a plurality of sequential frames to produce an avatar that depicts movement, such as facial gestures, in real-time or near real-time.

Some applications of virtual reality involve users interacting with one another in a virtual space. The virtual space may be provided in data form by a virtual reality system or server, which may provide a virtual reality service from a computing device located at a given location which may or may not be geographically remote from the users and their user devices. For example, the virtual reality service may be located in the cloud. For example, two or more users in communication with the virtual reality service may be represented in a virtual space and the two users may wish to interact within the virtual space, for example through voice and/or textual communications. The virtual space may represent a form of virtual chat-room or a game in which players communicate. This communication may be facilitated by a communications service of the virtual reality service to multiple user devices or a third-part communication service. For example, one or more users may select an avatar corresponding to another user in order to initiate (and/or terminate) a communications session. Additionally, or alternatively, a user may initiate a communications session based on their position in the virtual space relative to one or more other users' avatars. For example, a subject user may navigate within the virtual space so that their avatar (hereafter "user avatar") faces a second avatar corresponding to a different user. This may initiate a communications session. In some embodiments, the subject user may need to navigate their avatar to be within a predetermined distance of the second avatar. Other implementations are possible, including gesture based initiation where a user may initiate communications by pointing or waving at a second avatar.

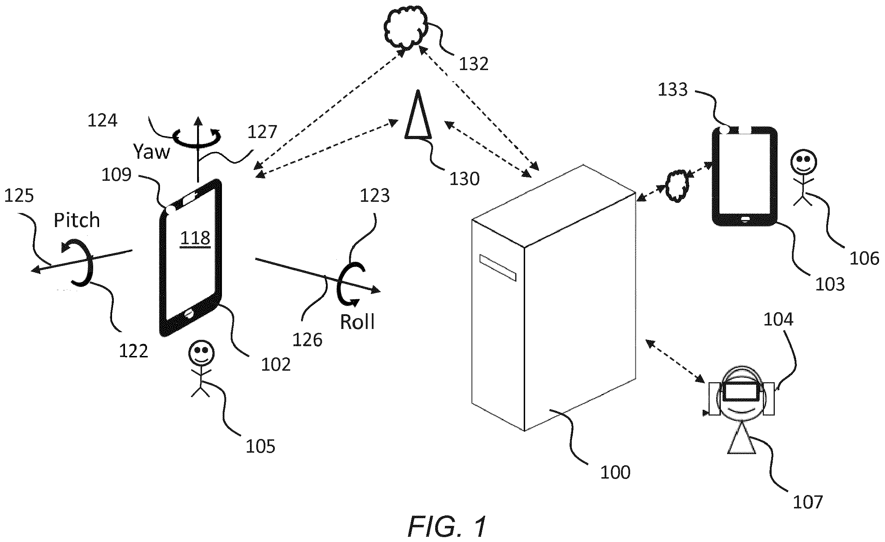

FIG. 1 is a schematic illustration of a virtual reality system 100 for providing a virtual reality service to one or more users 105, 106, 107, according to an example embodiment. The virtual reality service may comprise data representing at least video and possibly audio data that may be provided to the one or more users 105, 106, 107 representing a virtual space which may be navigated in terms of spatial position and/or orientation within the virtual space. The virtual reality system 100 may comprise a server or it may itself comprise a user device. The virtual reality system 10 may communicate with a plurality of user devices 102, 103, 104 each associated with a respective user 105, 106, 107. For example, a first user device 102 which is associated with a first "subject" user 105 may comprise a smartphone. A second user device 103 which is associated with a second user 16 may also comprise a smartphone or tablet computer. A third user device 104 which is associated with a third user 107 may comprise a virtual reality headset e.g. a head-mounted display (HMD) or goggles. Other user equipment types are possible, including for example personal computers, laptop computers, digital assistants, tablet computers and so on.

The virtual space provided by the virtual reality system 100 may be provided by any suitable means. For example, the virtual space may be a captured version of a real-world space, possibly using a spatial camera device such as Nokia's OZO camera system. Spatial cameras may comprise a body on which are provided a plurality of spatially distinct cameras and possibly microphones for capturing video and audio. The captured video may be "stitched" together in post-processing to provide a three-dimensional space which may be navigated during a consumption phase. Navigation may be 3DoF or 6DoF.

Communication between the first to third user devices 102, 103, 104 and the virtual reality system 100 may be by means of any suitable means, for example wireless or wired means. For example, communications may be by means of a cellular radio link via a base station 130 using any suitable current or future protocol such as 3G, 4G, LTE, 5G and so on. For this purpose, one or more of the first to third user devices 102, 103, 104 may comprise a radio transmitter and receiver configured for such communications. For example, communications may be by means of an IP network 132 such as the Internet whereby one or more of the first to third user devices 102, 103, 104 may comprise a network card or similar means to access the Internet via a WiFi router or gateway. For example, direct, short-range communications such as Bluetooth may be used.

Each of the first to third user devices 102, 103, 104 may comprise a display 118, which may be a touch-screen display. One or more of the first to third user devices 102, 103, 104, including the first user device in this case, may also comprise a camera. For example, the first user device 102 may comprise a front-facing camera 109 located on the same side or plane as the display 118. Many smartphones, tablet computers and laptops feature front-facing cameras for the purpose of video-conferencing and/or taking "selfie" pictures. In this respect, the first user device 102 may have two major opposite sides having the greatest area, namely a front and a rear side, connected with relatively narrow side edges which may provide one or more feature buttons. In the context of example embodiments, the front-facing camera 109 of the first user device 102 is suitable for capturing an image of the first user 105 for the purpose of creating or updating an avatar which appears in a virtual space provided by the virtual reality system 100. Being on the same side of the display 108 means that the first user 105 may capture their own image, for example their facial image, whilst the viewport of the virtual space provided to their display is shown. By using the captured image to create an avatar which is presented within the viewport means that the first user 105 can see how their avatar appears to other users using the virtual space.

The second user device 103 may be similarly arranged with a front-facing camera 133. Both the first and second user devices 102, 103 may also have rear-facing cameras.

The third user device 104, being a virtual reality headset, may be of any suitable type. The virtual reality headset 104 may be configured to provide virtual reality video and possibly audio content data to a user by means of respective screens and headphones mounted internally of the headset. As such, the user may be immersed in the virtual space.

In some example embodiments, one or more of the first to third user devices 102, 103, 104 may be associated with a media player, e.g. another computer device, which sits between the virtual reality system 100 and the respective user device and handles the rendering of content to the user device. However, in the shown examples, the first to third user devices 102, 103, 104 may themselves handle receipt and rendering of the virtual reality content.

Where the one or more of the first and second user devices 102, 103 comprise a smartphone, or similar, the device may be inserted into a holder of a virtual reality headset. With such virtual reality headsets, a smart phone or tablet computer may display the video data which is provided to a user's eyes via respective lenses in the virtual reality headset.

Each of the first to third user devices 102, 103, 104 may include a means for determining a spatial position and/or orientation of the user 105, 106, 107 for effecting a corresponding position and/or orientation placement or change within the virtual space. This may be by means of determining a change or movement in spatial position and/or orientation of one or more of the first to third user devices 102, 103, 104. Orientation of the first user device 102 may, for example, be represented by yaw 124, pitch 122, and roll 123 axes, by rotations about corresponding axes 127, 125, 126, as illustrated in FIG. 1. Translational movement may be represented by a movement of the first to third user devices 102, 103, 104 in a corresponding way. Over successive time frames, a measure of movement may therefore be calculated and stored. For example, the first, second and third user devices 102, 103, 104 may incorporate motion tracking sensors which may include one or more of gyroscopes, accelerometers and structured light systems. In other embodiments, external camera systems may gauge position and/or orientation. In other embodiments, the first to third users 105, 106, 107 may carry positioning tags which may signal to tag readers a signal from which position can be determined.

In some embodiments, the virtual reality system 100 may include means for determining the gaze direction of the user. In some embodiments, gaze direction may be determined using eye gaze tracking sensors provided on one or more of the first to third user devices 102, 103, 104. The eye gaze tracking sensors may, for example, be miniature cameras. In some embodiments, the eye gaze tracking system may include infrared light emitting diodes that illuminate the eye cornea resulting in better detection of the pupil contour and producing corneal reflections such as glints that can be detected by the miniature cameras and be used as a means to increase the gaze tracking accuracy and robustness. The identified positions may be used to determine which part of the current viewport is of interest to the user. This information can be used for example to identify one or more sub-sets of content within the video data, e.g. objects or regions projected at a particular depth within the content. For example, the convergence point of both eyes may be used to identify a reference depth.

Audio data may also be provided to headphones or speakers provided as part of the first to third user devices 102, 103, 104. The audio data may represent spatial audio source content. Spatial audio may refer to directional rendering of audio in the virtual reality space or world such that a detected change in the user's spatial position or in the orientation of their head may result in a corresponding change in the spatial audio rendering to reflect a transformation with reference to the space in which the spatial audio data is rendered.

Whichever form used, the generated position data may be received and used by the virtual reality system 100 to determine a current viewport which is transmitted back to the relevant user device 102, 103, 104 in terms of at least video data. The viewport may be updated based on position and orientation changes in real-time or near real-time.

For example, the first user 105, when holding the first user device 108 to consume a viewport of the virtual space may wish to reposition their avatar within the virtual space. They may move the first user device 105 up, down, sideways and/or diagonally, which can be detected by the above-mentioned motion tracking sensors to effect a corresponding motion. This positional data, conveyed to the virtual reality system 100, may effect a corresponding, mirrored movement of the first user's avatar which the user can see in the virtual space. This permits an intuitive form of navigation.

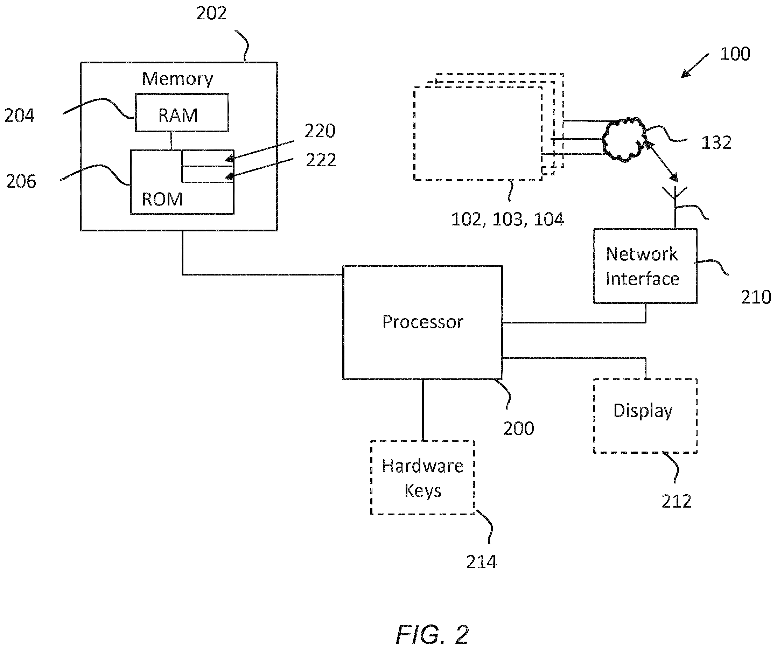

FIG. 2 is a schematic view of an apparatus which may provide the virtual reality system 100 shown in FIG. 1.

The apparatus 100 may have a processor 200, a memory 202 closely-coupled to the processor and comprised of a RAM 204 and ROM 206. The apparatus 100 may comprise a network interface 210, and optionally a display 212 and one or more hardware keys 214. The apparatus 100 may comprise one or more such network interfaces 210 for connection to a network, e.g. a radio access network. The one or more network interfaces 210 may also be for connection to the internet, e.g. using WiFi or similar. The processor 200 is connected to each of the other components in order to control operation thereof.

The memory 202 may comprise a non-volatile memory, a hard disk drive (HDD) or a solid state drive (SSD). The ROM 206 of the memory stores, amongst other things, an operating system 220 and may store one or more software applications 222. The RAM 204 of the memory 202 may be used by the processor 200 for the temporary storage of data. The operating system 220 may contain code which, when executed by the processor, implements the operations as described below, for example in the various flow diagrams. As mentioned below, the memory 202 may comprise any suitable form, and may even be implemented in the cloud.

One or more of the software applications 222 may comprise means for rendering a virtual space to the first, second and third users 105, 106, 107 dependent on their respective positions and orientations. The virtual space itself may comprise a dataset either stored on the memory 202 or on separate storage, or even stored remotely in the cloud.

The processor 200 may take any suitable form. For instance, the processor 200 may be a microcontroller, plural microcontrollers, a microprocessor, or plural microprocessors and the processor may comprise processor circuitry.

The network 132 and the first to third user devices 102, 103, 104 are shown connected to the apparatus 100 via the network interface 210 for context, but do not necessarily form part of the apparatus.

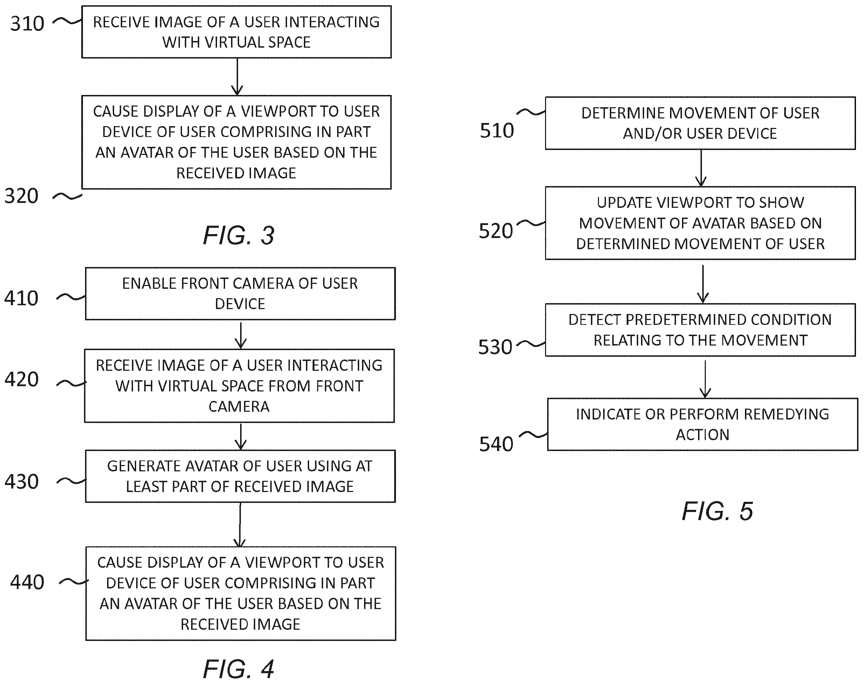

Referring to FIG. 3, a flow diagram showing processing operations that may be performed by the apparatus 100 of FIG. 2 is shown. The operations may be embodied in computer-readable code stored in a software application 222 but may also be embodied in hardware or firmware, of a combination of the above types.

A first operation 310 may comprise receiving from a user device an image of a user interacting with a virtual space.

A second operation 320 may comprise causing display of a viewport to the user device comprising in part an avatar of the user based on the received image.

Referring to FIG. 4, a flow diagram showing other example processing operations that may be performed by the apparatus 100 of FIG. 2 is shown. The operations may be embodied in computer-readable code stored in a software application 222 but may also be embodied in hardware or firmware, of a combination of the above types.

A first operation 410 may comprise enabling a front camera of a user device.

A second operation 420 may comprise receiving an image of a user interacting with a virtual space from the front camera.

A third operation 430 may comprise generating an avatar of the user using at least part of the received image, e.g. a facial part.

A fourth operation 440 may comprise causing display of a viewport to the user device comprising in part the avatar of the user based on the received image. If the image captured by the front camera is that of the user's face, then the user can see their own face in the viewport provided to their display.

Referring to FIG. 5, a flow diagram showing other processing operations that may be performed by the apparatus 100 of FIG. 2 is shown. The operations may be embodied in computer-readable code stored in a software application 222 but may also be embodied in hardware or firmware, of a combination of the above types.

A first operation 510 may comprise determining movement of the user and/or their user device.

A second operation 520 may comprise updating the viewport to show movement of the avatar based on the determined movement of the user.

A third operation 530 may comprise detecting a predetermined condition relating to the movement.

A fourth operation 540 may comprise indicating or performing a remedying action, examples of which will be explained below.

For example, the predetermined condition may be where a user has navigated to a predetermined extreme position, e.g. by moving themselves or their user device too far to the left or right, in which case a remedying action may cause rotation of the user about a position to keep their avatar and another avatar within the viewport. For example, the predetermined condition may be where, due to navigation, an object is occluding the line-of-sight between avatars, in which case a remedying action may be an indication that the first user may return to a previous or nearby position whereby a line-of-sight can be re-established. Another remedying action, as an additional or alternative option, may be to provide a picture-in-picture image of the first user avatar in the display 118 until the occlusion ceases.

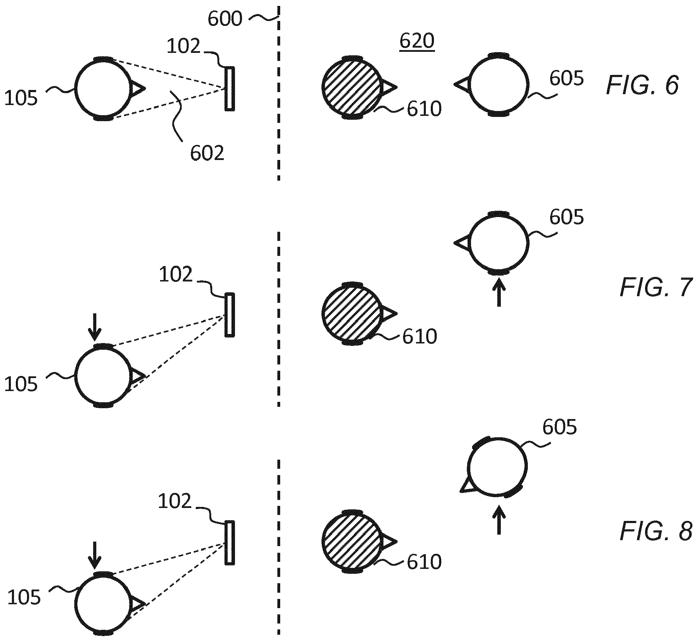

FIGS. 6 to 14 provide graphical examples which will now be described in more detail.

FIG. 6 shows in top plan view the first user 105 in a real-world space, in relation to the first user device 102 in the form of a smartphone. The area 602 represents the field-of-view of the front-facing camera 109 indicated in FIG. 1. The dashed line 600 represents a conceptual divide between the real-world space and a corresponding virtual space 620 that the first user 105 is immersed in at the corresponding time. The virtual space 620 comprises a second user avatar 610, which may correspond to one of the second or third users 106, 106 shown in FIG. 1, and an avatar 605 representing the first user 105. The avatar 605 may be the face of the first user 105 such that the first user can see their own face and facial expression through the display of the viewport.

FIG. 7 is similar to FIG. 6, but in this case the first user 105 has moved leftwards in the real-world space with respect to the first user device 102 in order to effect a navigational change within the virtual space 620. Alternatively, the first user 105 may move the first user device 102 rather than move themselves, or may both move in opposite directions. The resulting movement in the virtual space 620 may be a reverse-mirror movement whereby the avatar moves rightwards from the point-of-view of the first user 105. Thus, the first user 105 can navigate their avatar 605 within the virtual space 620 merely by changing the relative position between themselves and the first user device 102.

The resulting image that is captured by the front-facing camera 109 may be analysed to determine said relative position change and to provide such navigational control for this example, and other described herein. For example, the analysis may estimate the distance between the first user 105 and the first user device 102 or camera 109. Other means of estimating the distance in this way may be used. The analysis may be performed in either or both of the first user device 102 and the virtual reality system 100.

FIG. 8 is similar to FIG. 7 but in the case the first user 105 may also control the viewport position/orientation and not the avatar 605 position in order to move the viewport position/orientation in the virtual space 620 around the second user avatar 610, e.g. at a fixed distance. The virtual reality system 100 may automatically rotate the viewport view that the first user 105 may maintain a line of sight both to himself and the other user. This may be means of, for example, some other input.

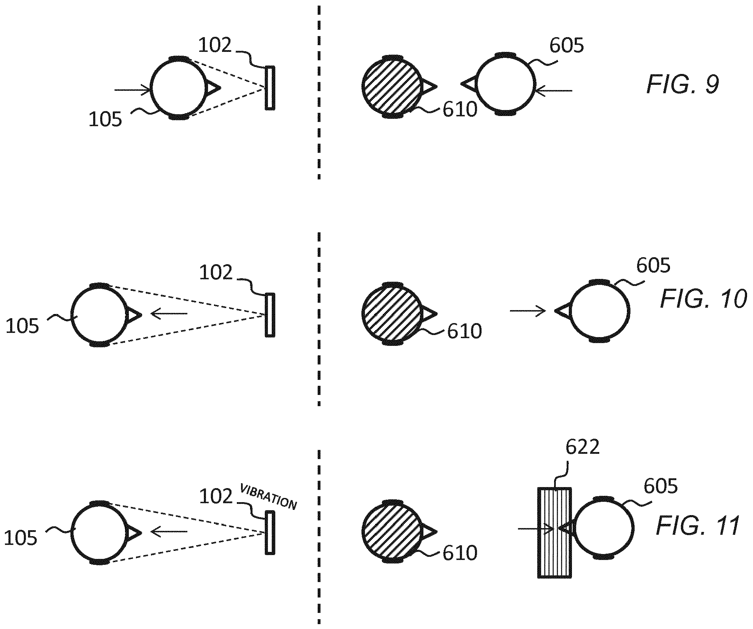

FIG. 9 is similar to FIG. 6, but in this case the first user 105 has moved towards the first user device 102 in the real-world space 102 in order to effect a navigational change within the virtual space 620. Alternatively, the first user 105 may move the first user device 102 rather than move themselves, or may both move in opposite directions towards one another. The resulting movement in the virtual space 620 may be a mirrored movement whereby the avatar 605 moves towards the second user avatar 610. Thus, the first user 105 can navigate their avatar 605 within the virtual space 620 merely by changing the relative position between themselves and the first user device 102. The resulting image that is captured by the front-facing camera 109 is analysed to determine said relative position change and to provide such navigational control. The analysis may be performed in either or both of the first user device 102 and the virtual reality system 100.

FIG. 10 is similar to FIG. 6, but in this case the first user 105 has moved away from the first user device 102 in the real-world space in order to effect a navigational change within the virtual space 620. Alternatively, the first user 105 may move the first user device 102 rather than move themselves, or may both move in opposite directions. The resulting movement in the virtual space 620 may be a mirror movement whereby the avatar moves away from the second user avatar 610. Thus, the first user 105 can navigate their avatar 605 within the virtual space 620 merely by changing the relative position between themselves and the first user device 102. The resulting image that is captured by the front-facing camera 109 is analysed to determine said relative position change and to provide such navigational control. The analysis may be performed in either or both of the first user device 102 and the virtual reality system 100.

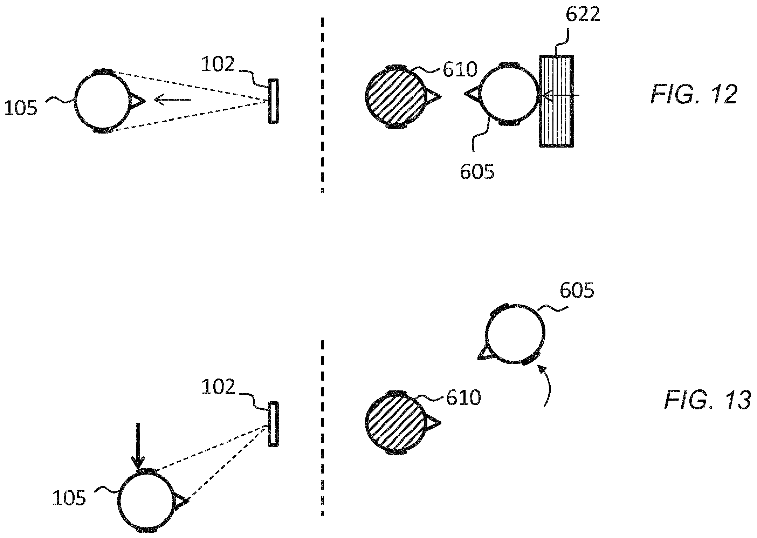

FIG. 11 is similar to FIG. 10, but in this case the virtual reality system 100 has detected that a virtual object 622 has occluded the line-of-sight between the first user 105 and the second user avatar 610 due to the mirror movement away from one another. For example, the first user 105 may be located within or behind the virtual object 622, which would be undesirable for most navigational and/or communications applications. Consequently, an indication is made to the first user 105, for example by means of the first user device 102. This indication may be a vibration or other suitable indication. Furthermore, a selectable option may be made available to the first user 105 to return to a position, e.g. a prior position, or an alternative nearby position, whereby there the visual connection is returned. For example, a selectable icon may appear on the display 118, selection of which returns the avatar 605 to the position shown in FIG. 12.

FIG. 13 is similar to FIG. 7, but shows how a longer movement in one direction may be sustained, for example to effect a rotational movement of the avatar 605 when the user is at the extreme right hand side of the user device 102 for longer than a predetermined threshold time. For example, this may occur when movement exceeds a predetermined maximum threshold distance. Rightwards movement of the avatar 605 ceases and rotational movement follows. When the first user 105 comes back from the extreme right hand side, the rotation may cease. This facilitates convenient scene navigation to arbitrary positions and directions while maintaining a fixed distance with respect to the second user avatar 610 using the first user device 102 as the control, and without the first user needing a large space for movement. Distance may be determined using, for example, the user device 102 detecting that the distance between the device and the first user 105 has exceeded a threshold distance, which may be the maximum threshold distance. Other methods of determining where the first user 105 is positioned in relation to the user device 102 may be used for the same purpose.

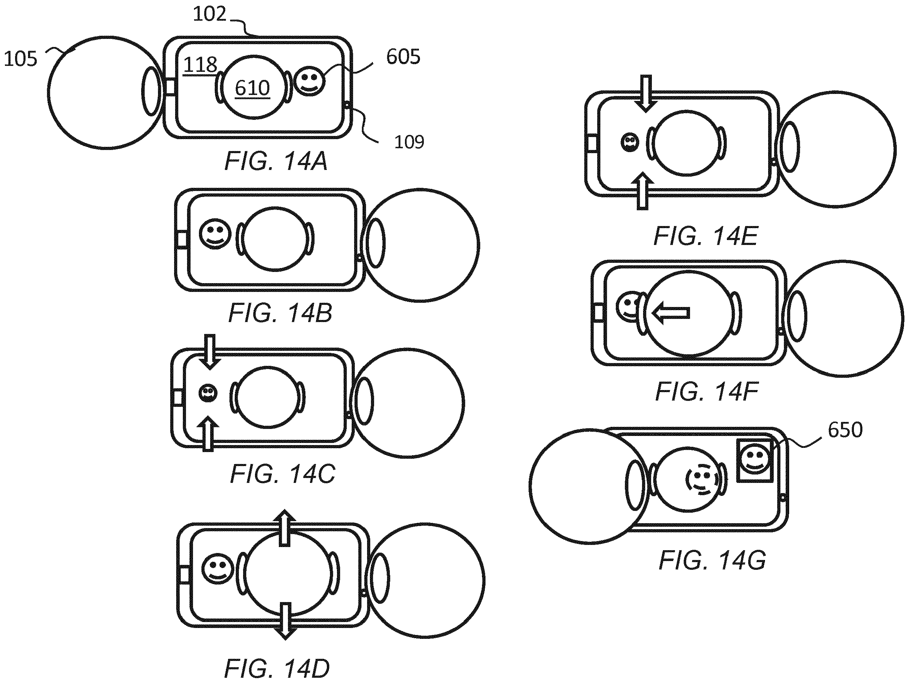

FIG. 14A shows in perspective view the first user 105 having moved leftwards with respect to the first user device 102. Here it will be seen that the viewport shows the first user avatar 605 moving rightwards with respect to the rear-side view of the second user avatar 610.

FIG. 14B shows in perspective view the first user 105 having moved rightwards with respect to the first user device 102. Here it will be seen that the viewport shows the first user avatar 605 moving leftwards with respect to the rear-side view of the second user avatar 610, as in the situation described with reference to FIG. 7.

FIG. 14C shows in perspective view the first user 105 having moved their own avatar 605 in the virtual space further away from the second user avatar 605 by means of some form of interaction, whether by moving away from the camera 109 or by a pinch-type input through the display 118. For example, the first user 105 pinching their own avatar 605 may move them further away from the second user avatar 610 and the opposite "open-pinching" may move them closer. This can also be applied to the second user avatar 610, whereby the first user 105 may pinch or open-pinch the second user avatar to effect a change in position. This is shown in FIG. 14D whereby the second user avatar 610 can be moved closer or further away.

FIG. 14E shows in perspective view how the first user 105 may effect zooming of the entire virtual space within the viewport by pinching or open-pinching on the background region (not the avatars). This is akin to a traditional zoom-in or zoom-out.

FIG. 14F shows in perspective view how the first user 105 may swipe the second user avatar 610 to move their position to the left (or right) also.

FIG. 14G shows in perspective view the situation whereby the second user avatar 610 may appear in the line-of-sight between the first user 105 and their own avatar 605. In this case, the virtual reality system 100 may detect this condition and automatically provide a picture-in-picture display 650 of the first user avatar 605 in a different part of the display 118 to ensure that the first user 605 can still see their avatar. When the occlusion no longer exists, the picture-in-picture display may automatically disappear. Alternatively, a notification, whether visual, audible and/or a haptic (e.g. vibrating) may be provided to the user device informing them of the occlusion. In some embodiments, an option may be provided enabling the user to move their avatar to a location where the line-of-sight can be re-established, e.g. a previous state or an alternative, closest location where there is no occlusion. The same option may be provided if, for example, the user avatar is moved to the same location as an object or other avatar, or if one or more second avatars corresponding to other users with whom the user is in communication or interacting with, moves from the viewport, whether due to user navigation or movement by the one or more other users.

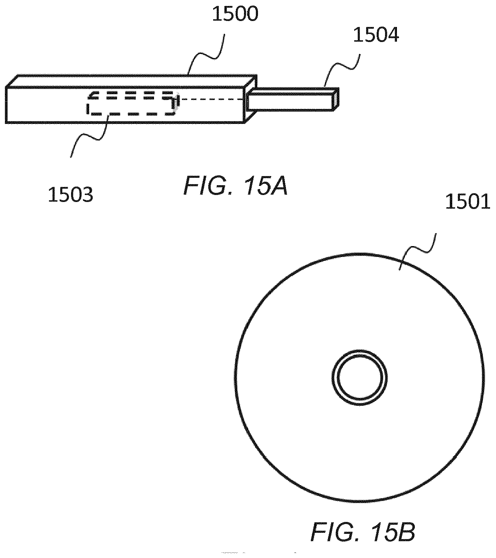

FIG. 15A and FIG. 15B show tangible non-volatile media, respectively a removable memory unit 1500 and a compact disc (CD) 1501, each storing computer-readable code which when run by a computer may perform methods according to example embodiments described above. The removable memory unit 1500 may be a memory stick, e.g. a USB memory stick, having internal memory 1503 storing the computer-readable code. The internal memory 1503 may be accessed by a computer system via a connector 1504. The CD 1501 may be a CD-ROM or a DVD or similar. Other forms of tangible storage media may be used.

Example embodiments provide a way of enabling user understanding of how they appear in a virtual space when interacting with other users, and a way of navigating within the space, for example to avoid objects or to make better visual connections with other users. This is provided by a viewport which is a window into the virtual world but which also shows an avatar version of the user. Example embodiments also relate to a way of remediating potential issues, for example if an object occludes an interaction or visual connection, and also provides a way of returning back to where a visual connection existed.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some example embodiments may be implemented in the cloud and utilize virtualized modules.

Example embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus comprising means for:
receiving image data representing one or more images of a user interacting with a virtual space, wherein the image data is received from a camera provided on a user device associated with the user;
causing display, to a display of the user device associated with the user, the display being on substantially the same side or plane of the user device as the camera, of video data representing a viewport of the virtual space, which viewport in part comprises a virtualised avatar of the user based on the received image data, whereby the user avatar is also displayable in viewports provided to one or more other users interacting with the virtual space.

2. The apparatus of claim 1, wherein the user avatar represents a substantially mirrored version of the one or more user images.

3. The apparatus of claim 2, wherein the means is configured such that the user avatar, when displayed in viewports provided to one or more other users interacting with the virtual space, is a modified version based on the relative position of the one or more other users to the position of the user or user avatar in the virtual space.

4. The apparatus of any preceding claim, wherein the means is further configured for detecting from the received image data at least part of a user's face, generating the avatar of the user using the detected at least part of a user's face such that the viewport caused to be displayed to the user device shows in part their avatar in the virtual space.

5. The apparatus of any preceding claim, wherein the means is further configured for causing display to the user device of one or more second avatars in the viewport, the one or more second avatars representing the respective position of the one or more other users in the virtual space, and is optionally further configured to enable communication between one or more other users based on the relative proximity and/or orientation of the user avatar and the one or more second avatars.

6. The apparatus of any preceding claim, wherein the means is further configured to permit user navigation within the virtual space based on user input by means of movement of the user and/or the user device.

7. The apparatus of claim 6, wherein the means is configured to cause movement of the user avatar in the virtual space, responsive to detection of relative movement between the user and the user device.

8. The apparatus of claim 7, wherein the means is configured to perform translational movement of the user avatar in the virtual space responsive to detection of corresponding relative translational movement of the user and the user device.

9. The apparatus of claim 8, wherein, in the event that the user is involved in a communication with one or more other users represented by one or more second avatars in the virtual space, the means is further configured to limit the amount of translational movement of the user avatar from the one or more second avatars in the virtual space to a predetermined maximum threshold distance.

10. The apparatus of claim 9, wherein the means is further configured to effect a rotational movement of the user avatar responsive to further translational movement of the user and user device beyond the predetermined maximum threshold distance.

11. The apparatus of any of claims 6 to 10, wherein the means is further configured, responsive to detection of a predetermined user input or interaction, to cause the video data to represent movement of the viewport in the virtual space independent of movement of the user avatar.

12. The apparatus of any of claims 6 to 11, wherein the means is further configured to cause output of an indication to the user device in the event of one or more of:
an object being detected at the same location as the user location;
an object being detected between the user location and that of one or more second avatars in the viewport such as to substantially block the user avatar in the viewport, the one or more second avatars representing the respective position of the one or more other users in the virtual space; and
one or more second avatars, representing the respective position of the one or more other users in the virtual space, that were previously in the viewport have moved outside the viewport.

13. The apparatus of claim 12, wherein the means is further configured to return the viewport to an alternative or previous state in response to a user input or interaction.

14. The apparatus of any of claims 8 to 13, wherein the means is further configured to cause display a picture-in-picture image of the user avatar in response to an object or other avatar in the virtual space substantially blocking the user avatar in the viewport.

15. A method comprising:
receiving image data representing one or more images of a user interacting with a virtual space, wherein the image data is received from a camera provided on a user device associated with the user; and
causing display to a display of the user device associated with the user, the display being on substantially the same side or plane of the user device as the camera, of video data representing a viewport of the virtual space, which viewport in part comprises a virtualised avatar of the user based on the received image data, whereby the user avatar is also displayable in viewports provided to one or more other users interacting with the virtual space.
